(19) **Europäisches Patentamt**
**European Patent Office**
**Office européen des brevets**

(11) **EP 2 330 559 B1**

(12) **EUROPEAN PATENT SPECIFICATION**

(45) Date of publication and mention
of the grant of the patent:
**15.05.2013 Bulletin 2013/20**

(51) Int Cl.:
***G06T 11/00*** *(2006.01)*

(21) Application number: **10189045.7**

(22) Date of filing: **27.10.2010**

(54) **Computed tomographic device**

Computertomographiegerät

Dispositif de tomographique informatisée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2009 US 609999**
**16.08.2010 JP 2010181858**

(43) Date of publication of application:
**08.06.2011 Bulletin 2011/23**

(73) Proprietors:
• **Kabushiki Kaisha Toshiba**
**Tokyo 105-8001 (JP)**
• **Toshiba Medical Systems Corporation**
**Otawara-shi,**
**Tochigi-ken 324-8550 (JP)**

(72) Inventors:
• **Chiang, Be-Shan**
**Vernon Hills, IL 60061 (US)**
• **Zamyatin, Aleksandr**
**Vernon Hills, IL 60061 (US)**
• **Silver, Michael D.**
**Vernon Hills, IL 60061 (US)**
• **Zou, Yu**
**Vernon Hills, IL 60061 (US)**
• **Akino, Naruomi**
**Otawara-Shi, Tochigi 324-8550 (JP)**
• **Labno, Thomas**
**Vernon Hills, IL 60061 (US)**

(74) Representative: **Kramer - Barske - Schmidtchen**
**Landsberger Strasse 300**
**80687 München (DE)**

(56) References cited:
**EP-A2- 0 428 348        WO-A2-2008/064367**
**US-A1- 2007 297 661      US-B1- 6 282 256**

• **RAINER GRIMMER ET AL: "Cone-beam CT sequence scan reconstruction with improved dose usage and scan coverage", 2009 IEEE NUCLEAR SCIENCE SYMPOSIUM AND MEDICAL IMAGING CONFERENCE (NSS/MIC 2009), IEEE, ORLANDO, FL, USA, 24 October 2009 (2009-10-24), pages 3759-3763, XP031621271, ISBN: 978-1-4244-3961-4**
• **ZHYE YIN ET AL: "3D analytic cone-beam reconstruction for less than a full scan using a multi-source CT system", NUCLEAR SCIENCE SYMPOSIUM CONFERENCE RECORD, 2007. NSS '07. IEEE, IEEE, PI, 1 October 2007 (2007-10-01), pages 3929-3932, XP031206463, ISBN: 978-1-4244-0922-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 330 559 B1

**Description**

FIELD

Embodiments described herein relate generally to a computed tomographic device.

BACKGROUND

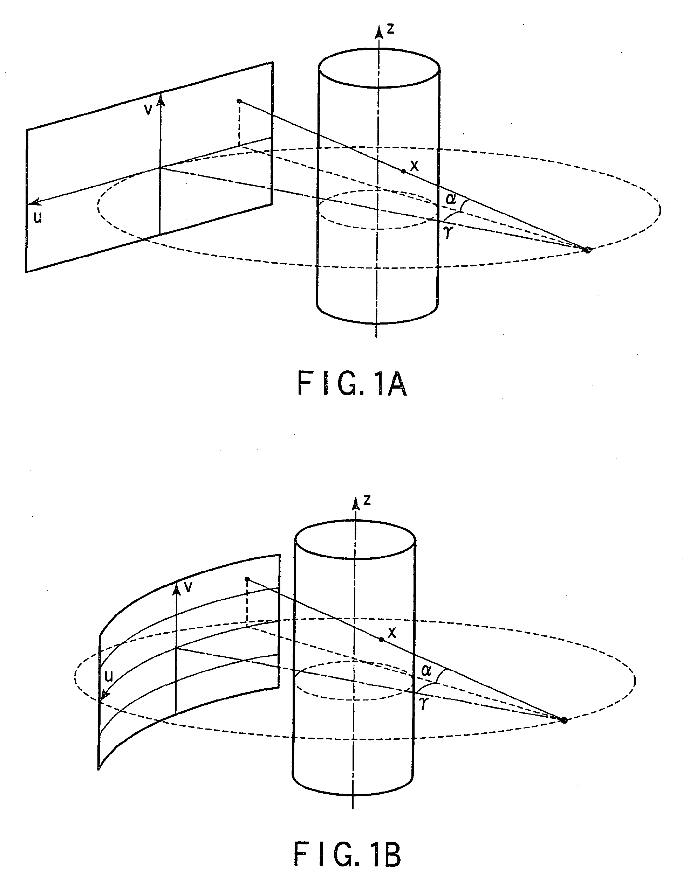

For computed tomography (CT), there are mainly a flat-type detector and a curved-type detector, as shown in FIGS. 1A and 1B, respectively. The flat detector has a flat surface parallel to the z-axis. The curved detector has a cylindrical surface which is parallel to the z-axis (rotation axis) and has a focal point on an x-ray source. Even though a detector is physically placed at any distance D from the x-ray source, it is a common practice to consider the detector at a distance R (the radius of an orbit of the x-ray source) from the x-ray source. As a result, the detector contains the rotation axis.

The most commonly used reconstruction algorithm for cone beam CT is called FDK. This algorithm uses data for full rotation, also called full scan (FS). Parker has proposed a method for only $\pi$ + FA, where FA represents the full detector fan angle opening with respect to a fan angle direction.

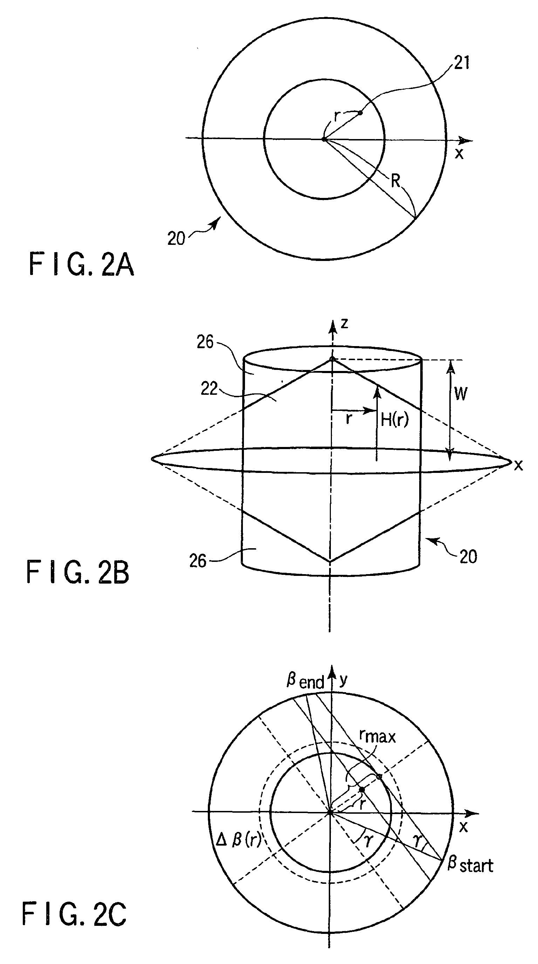

With reference to FIGS. 2A and 2B, a reconstruction volume for FS will be described. An FOV 20 is scanned with x-rays at source to center distance R. Assume that a reconstruction pixel 21 is positioned at a distance r from the center of the FOV 20. The z-direction of a volume reconstruction region with circular orbit scanning is limited by a divergent x-ray beam. The divergent x-ray beam cannot cover the full z-extent of the FOV 20 on the x-ray source side. Some corner regions of the FOV are not exposed to the x-rays at a particular view angle (see FIG. 2B). Coverage in the z-direction (z-coverage) is maximum at the center on the z-axis, and reduces at the periphery of the z-axis. A reconstruction FOV has a hexagonal shape represented by a region 22 with the thick lines in FIG. 2B. Since, however, the x-ray source rotates, missing parts are covered by the x-ray beam when the x-ray source is on the opposite side.

Volume coverage in the z-direction (volume z-coverage) at the distance r from the center is given by:

$$H_{FS}(r) = W \frac{R - r}{R} \qquad (1)$$

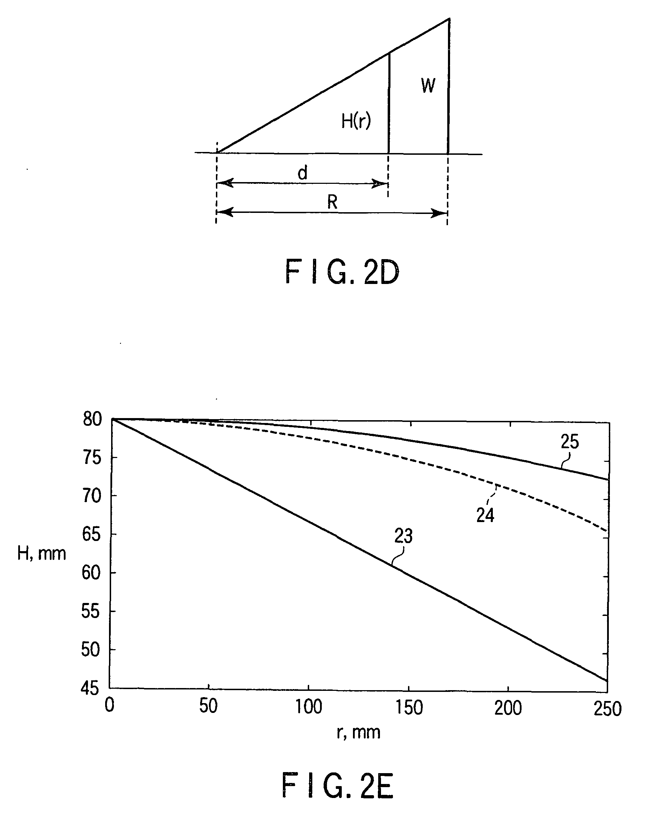

where W is the half-width at the center of a detector. At the center of a detector (r = 0), z-coverage is maximum, i.e., H = W. Moving away from the center, the z-coverage linearly reduces. In full scan, the z-coverage is independent of the detector type, i.e., a flat or curved detector. A reconstruction pixel has polar coordinates (y, $\Phi$). Its short-scan reconstruction range is denoted by [$\beta_{start}$, $\beta_{end}$], as shown in FIG. 2C. FIG. 2D shows the z-coverage, where H(r) is the half-height of the volume z-coverage at the distance r from the center. The fan angle under which the reconstruction pixel is viewed from a boundary view angle ($\beta_{start}$, $\beta_{end}$) is given by:

$$\gamma(r) = \arcsin\left(\frac{r}{R}\right) \qquad (2)$$

The endpoints of a view angle range are given by:

$$\beta_{start}(r, \varphi) = \varphi + \pi - \Delta\beta(r)/2$$

$$\beta_{end}(r, \varphi) = \varphi + \pi + \Delta\beta(r)/2 = \beta_{start}(r, \varphi) + \Delta\beta(r) \qquad (3)$$

where $\Delta\beta(r)$ represents the reconstruction view angle range, and is given by:

$$\Delta\beta(r) = \pi + 2\gamma(r) \tag{4}$$

In short scan with a curved detector, the volume z-coverage at the distance r from the center is given by:

$$H_{SS-CD}(r) = W\frac{d}{R} = W\cos\gamma(r) = W\frac{\sqrt{R^2-r^2}}{R} \tag{5}$$

In short scan with a flat detector, the volume z-coverage at the distance r from the center is given by:

$$H_{SS-FD}(r) = W\frac{d}{R/\cos\gamma(r)} = W\cos^2\gamma(r) = W\frac{R^2-r^2}{R^2} \tag{6}$$

FIG. 2E shows the volume z-coverage as a function of r. FIG. 2E shows z-coverage 23 for full scan, z-coverage 24 for short scan with a flat detector, and z-coverage 25 for short scan with a curved detector. For these curves, W = 80 mm, and R = 600 mm. Short scan provides better z-coverage as compared with full scan. A curved detector provides z-coverage better than that of a flat detector.

US 2007/297661 A1 relates to medical imaging using X-ray CT, and more particularly to reconstructing cone-beam X-ray scan data in tomographic imaging.

Claim 1 defines an improved CT device. Further advantageous embodiments are set forth in the dependent claims.

BRIEF DESCRIPTION OF THE DRAWINGS

FIG. 1A is a diagram showing the geometry of computed tomography with a flat detector;
FIG. 1B is a diagram showing the geometry of computed tomography with a curved detector;
FIG. 2A is a diagram showing a full scan reconstruction volume;
FIG. 2B is a diagram showing a full scan reconstruction volume;
FIG. 2C is a diagram showing half scanning;
FIG. 2D is a diagram showing half scanning;
FIG. 2E is a diagram showing the volume z-coverage with different scans as a function of the distance from the center;
FIG. 3 is a flowchart generally illustrating a method according to the first example of an embodiment;
FIG. 4 is a diagram showing a scan geometry;
FIG. 5A is a diagram showing reconstruction regions for a slice of an FOV having a circular cross-section;
FIG. 5B is a diagram showing the reconstruction regions for the slice of the FOV having a circular cross-section;
FIG. 6A is a diagram showing a view angle range in half scanning;
FIG. 6B is a diagram showing the view angle range in half scanning;
FIG. 7A is a graph showing the view angle range in radians as a function of the radial distance;
FIG. 7B is a graph showing the view angle range in radians as a function of z;
FIG. 8 is a view showing the central channel profiles of a weight for different view angle ranges and different values of a smoothing interval;
FIG. 9 is a view showing the central channel profiles of the weight for different view angle ranges and different values of the smoothing interval;
FIG. 10 is a diagram showing the second example of the embodiment;
FIG. 11 is a diagram showing the arrangement of a computed tomographic device according to the embodiment;
FIG. 12 is a diagram showing an image generated according to the embodiment, and that generated according to the prior art;
FIG. 13 is another diagram showing an image generated according to the embodiment, and that generated according to the prior art;
FIG. 14 is still another diagram showing an image generated according to the embodiment, and that generated according to the prior art; and
FIG. 15 is still another diagram showing an image generated according to the embodiment, and that generated according to the prior art.

## DETAILED DESCRIPTION

In general, according to one embodiment, a computed tomographic device includes an x-ray source, an x-ray detector, and a processor. The x-ray source emits x-rays. The x-ray detector detects x-rays emitted by the x-ray source and transmitted through a subject. The processor generates an entire image for the subject based on data collected by the x-ray detector. More specifically, the processor reconstructs the first partial image of the entire image using full-scan data. The processor reconstructs the second partial image of the entire image using short-scan data. The processor reconstructs the third partial image of the entire image using data extrapolated from the full-scan data. The processor generates a composite image of the second and third partial images. The composite image has an overlapping portion of the second and third partial images. The overlapping portion is associated with the weighted sum of the second and third partial images. The processor generates the entire image using the first, second, and third partial images, and the composite image.

In the embodiment, a subject is scanned in a circular orbit for a plurality of scans to obtain circular orbit image data for the subject. In circular orbit scan reconstruction, a field-of-view (FOV) size in the z-direction is determined by the projection of the detector on the central axis. Typically, the z-direction of a volume reconstruction region with circular orbit scanning is limited by a divergent x-ray beam. The divergent x-ray beam cannot cover the full z-extent of the FOV on the x-ray source side. Consequently, some corner regions of the FOV are not exposed to the x-rays at a particular view angle. Thus, z-coverage is maximum at the center, and reduces at the periphery. As a result, a reconstruction FOV has a hexagonal shape. FIGS. 2A and 2B show a hexagonally-shaped reconstruction FOV 22 of an FOV 20 and corner regions 26. However, because the x-ray source rotates, the corner regions are covered by the x-ray beam when the x-ray source is on the opposite side.

Even though there are not enough data to reconstruct the corner regions of the FOV using full-scan reconstruction, it is possible to reconstruct the corner regions using short-scan reconstruction. Each radial direction uses its own opposite short-scan arc on the orbit. Reconstruction according to the embodiment fully covers the FOV at the periphery, thereby obtaining a reconstruction FOV having a full rectangular shape. As a result, it is possible to get an improved image.

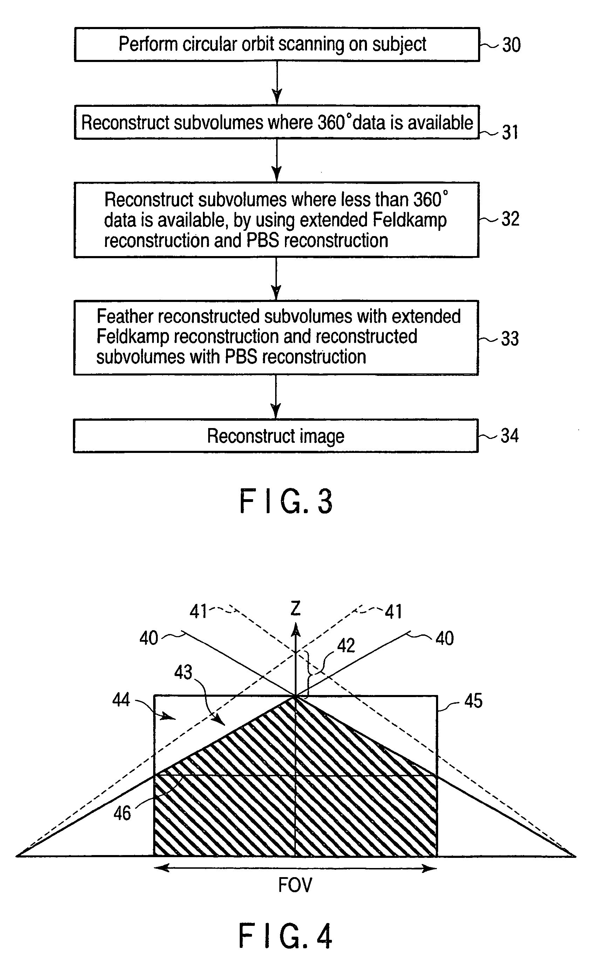

FIG. 3 shows the first example of the embodiment. As shown in FIG. 3, a subject is scanned with circular orbit scanning in step 30. FIG. 4 shows the geometry of the scan. FIG. 4 shows one half of a scanned region (FOV 45), with a fan angle indicated by lines 40. In the region of the FOV 45 which is defined by the lines 40 and crosshatches (data for one rotation, i.e., data for 360° are available), full-scan reconstruction is used. Dashed lines 41 define a region where data can be extrapolated from an extended segment 42 located in the z-direction. The region defined by the dashed lines 41 can be reconstructed. Data are extrapolated by a known method. Extrapolating more data introduces more errors. When less data are used in extrapolation, there can be a jump in pixel values, thereby producing discontinuity in an image.

Reconstruction in corner regions is performed using a reconstruction method termed PBS (Pixel-Based Sector) reconstruction (to be described later in more detail). The corner regions include regions 43 and 44. The PBS reconstruction is used in the regions 43 and 44. Extrapolated data is reconstructed in the region 43. In the PBS reconstruction, each image pixel has a unique short-scan (SS) reconstruction view angle range. A plurality of pixels on a ray share the same short-scan reconstruction view angle range. However, in discrete image coordinates, a plurality of image pixels belong to different rays. Therefore, the short-scan weighting function is computed for the image pixels. Such sector assignment allows the best possible data utilization, and then improves image quality.

For a region in the FOV from z = 0 up to a line 46, data for 360° (full-scan data) are available. Subvolumes for the region are reconstructed with full-scan reconstruction based on the full-scan data (step 31). The region in the FOV from z = 0 up to the line 46 will be referred to as a full-scan region hereinafter. For a region in the FOV from the line 46 up to the top of the FOV, data for 360° are not available. In other words, for this region, data for less than 360° (short-scan data) are available. Subvolumes for the region are reconstructed with at least one of expanded full-scan reconstruction and PBS reconstruction based on the short-scan data (step 32). The region in the FOV from the line 46 up to the top of the FOV will be referred to as a short-scan region hereinafter. In the region 43, the expanded full scan and the PBS reconstruction overlap. The region 43 will be referred to as an extended region hereinafter. Note that the expanded full-scan reconstruction indicates full-scan reconstruction based on extrapolated data. Subvolumes for the extended region 43 are reconstructed using the full-scan reconstruction based on the extrapolated data. Also, subvolumes for the extended region 43 are reconstructed using the PBS reconstruction based on the short-scan data. Subvolumes for the region 44 are reconstructed using the PBS reconstruction based on the short-scan data. The region 44 will be referred to as a PBS region hereinafter. The weighted sum of the subvolumes reconstructed using the expanded full-scan reconstruction and those reconstructed using the PBS reconstruction is obtained using a weighting function (to be described later in more detail) (step 33). With this operation, subvolumes based on the weighted sum of the subvolumes reconstructed using the expanded full-scan reconstruction and those reconstructed using the PBS reconstruction are generated. For the extended region 43, for example, the subvolumes reconstructed using the expanded full-scan reconstruction and those reconstructed using the PBS reconstruction are feathered. An image for the entire FOV is reconstructed based on the various subvolumes and the weighted sum (step 34). More specifically, an image for the entire FOV is reconstructed based on the subvolumes reconstructed in step 31, those reconstructed in step 32, and those reconstructed in step 33.

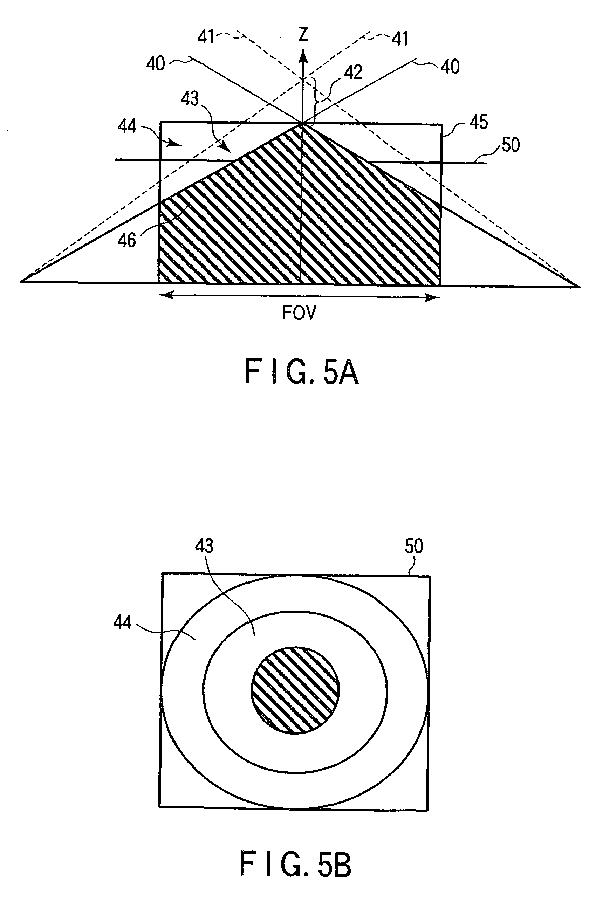

FIGS. 5A and 5B show reconstruction regions for a slice 50 on the FOV. The slice 50 has a circular cross-section intersecting with the full-scan (crosshatched) region, the extended region 43, and the PBS region 44. Note that the method according to the embodiment is usable for an FOV having any shape. The following description will be given by exemplifying half scanning as short scanning.

In more detail, given a reconstruction pixel x'(x, y, z), its polar coordinates are given by:

$$ r = \sqrt{x^2 + y^2} $$

$$ \varphi = \arctan\left(\frac{y}{x}\right) \tag{7} $$

The full-scan region is given by:

$$ \Omega_{FS} = \left\{ (x, y, z) \mid \ |z| \leq H_{FS}\big(r(x, y)\big) \right\} \tag{8} $$

where $H_{FS}(r)$ is given by equation (1). The half-scan region is given by:

$$ \Omega_{HS} = \left\{ (x, y, z) \mid \ |z| \leq H_{HS-CD}\big(r(x, y)\big) \right\} \tag{9} $$

where $H_{HS-CD}(r)$ is given by equation (5). $\Omega_{FS}$ represents a subset of $\Omega_{HS}$. The extended region is given by a difference defined by:

$$ \Omega_{EXT} = \Omega_{HS} - \Omega_{FS} \tag{10} $$

If the reconstruction pixel belongs to the full-scan region (i.e., x' $\in \Omega_{FS}$), the full-scan algorithm given below may be used as described in A. A. Zamyatin, K. Taguchi, and M. D. Silver, "Practical Hybrid Convolution Algorithm for Helical CT Reconstruction", IEEE Transactions on Nuclear Sciences, vol. 53, no. 1, pages 167-174, which is incorporated herein by reference:

$$ f(x') = \frac{1}{4\pi} \int_0^{2\pi} \frac{1}{L(\beta, x')} Q_0 \big[ g(\beta, \gamma, \alpha) \big] \Big|_{\substack{\gamma = \gamma(\beta, x') \\ \alpha = \alpha(\beta, x')}} d\beta \tag{11} $$

where $Q_0[\cdot]$ represents DC-adjusted ramp convolution as described by Zamyatin et al., and $L(\beta, x')$ is the distance between the x-ray source $y(\beta)$ and the pixel x'. Note that full scan Feldkamp reconstruction may be used.

If the reconstruction pixel belongs to the extended region (i.e., x' $\in \Omega_{EXT}$), a short-scan algorithm described by Zamyatin et al. is used.

$$f(x') = \frac{1}{2\pi} \int_{\beta_{start}(x')}^{\beta_{end}(x')} \frac{w_N(\beta, x')}{L(\beta, x')} K[g(\beta, \gamma, \alpha)]\Big|_{\substack{\gamma = \gamma(\beta, x') \\ \alpha = \alpha(\beta, x')}} d\beta \qquad (12)$$

where $K[\cdot]$ denotes hybrid convolution described by Zamyatin et al. and $w_N$ denotes a weighting function. The weighting function $w_N$ will be described later in more detail.

The embodiment will be explained in more detail below. Note that equations (3) above define a $1\pi$ view angle range, i.e., a minimum view angle range. These equations are useful to find a region where short-scan reconstruction without extrapolation is possible. However, a larger short-scan range (a less than $2\pi$ view angle range) may be used. Including more data into reconstruction reduces noise and cone beam artifacts. Thus, a maximum short-scan range as a function of the image slice z-position and r is derived. FIG. 2E shows volume coverage for different values of r. A $2\pi$ view angle range is available for a line 23, while a $1\pi$ view angle range is available for lines 24 (a straight detector) and 25 (a curved detector). The available view angle range varies from $1\pi$ to $2\pi$ between the lines 23 and 24 or between the lines 23 and 25.

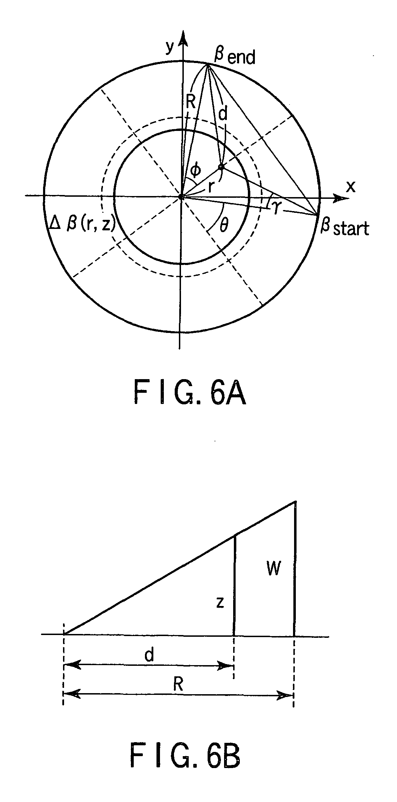

As the arc of the orbit wraps around the image slice, the projection cone angle increases. If z and r are given, a reconstruction view angle range $[\beta_{start}, \beta_{end}]$ is determined by a value d, as shown in FIGS. 6A and 6B. The value d is given by:

$$d = R\frac{z}{W} \qquad (13)$$

That is, the value d represents a shortest distance at which the x-ray source can approach a pixel (r, $\Phi$) without projecting outside of the detector. Referring to FIGS. 6A and 6B, an extended view angle range is given by:

$$\beta_{start}(r, \varphi, z) = \varphi + \pi - \Delta\beta(r, z)/2$$

$$\beta_{end}(r, \varphi, z) = \varphi + \pi + \Delta\beta(r, z)/2 = \beta_{start}(r, \varphi, z) + \Delta\beta(r, z) \qquad (14)$$

$$\Delta\beta(r, z) = \pi + 2\theta \qquad (15)$$

$$\theta = \frac{\pi}{2} - \phi, \qquad \phi = \arcsin\left(\frac{d}{R}\sin\gamma\right) \qquad (16)$$

$$\gamma = \arccos\left(\frac{r^2 + d^2 - R^2}{2rd}\right) \qquad (17)$$

Alternatively, after some simplifications, the following equations are obtained:

$$\Delta\beta(r, z) = 2\pi - 2\phi \qquad (18)$$

$$\phi = \arcsin\left(\frac{\sqrt{\left(R^2 - (r-d)^2\right)\left((r+d)^2 - R^2\right)}}{2Rr}\right) \qquad (19)$$

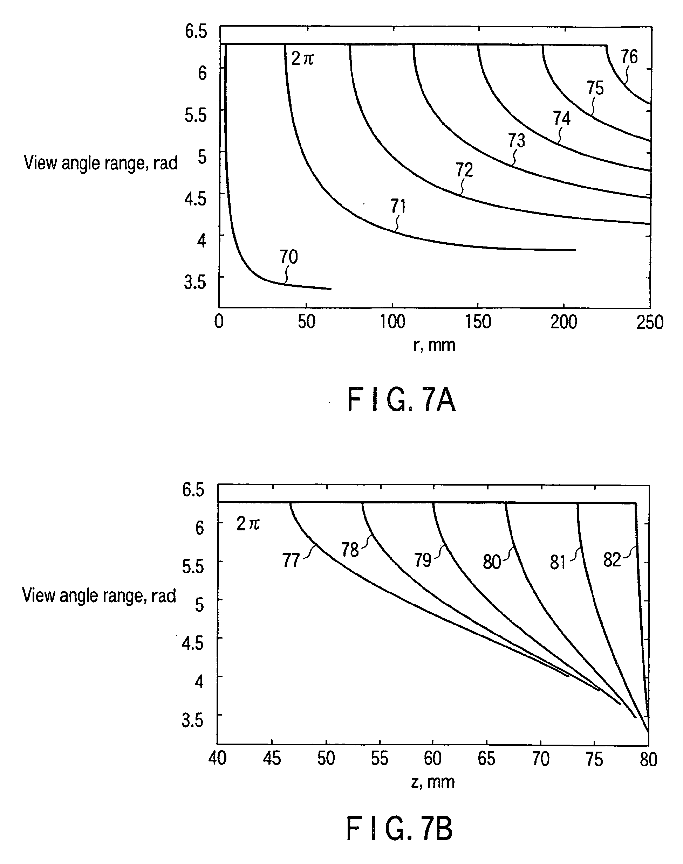

FIG. 7A shows the view angle range as a function of r. The view angle range is represented in radians (rad). A curve 70 corresponds to z = 79.5; a curve 71 corresponds to z = 75; a curve 72 corresponds to z = 70; a curve 73 corresponds to z = 65; a curve 74 corresponds to z = 60; a curve 75 corresponds to z = 55; and a curve 76 corresponds to z = 50. FIG. 7B shows the view angle range as a function of z. A curve 77 corresponds to r = 250; a curve 78 corresponds to r = 200; a curve 79 corresponds to r = 150; a curve 80 corresponds to r = 100; a curve 81 corresponds to r = 50; and a curve 82 corresponds to r = 10.

Each image pixel is given its own redundancy weight depending on the position of the pixel and that of the x-ray source. A general FDK algorithm with short-scan weighting performs weighting before convolution. Each pixel data is convolved and back-projected. The efficiency improves if redundancy weighting is performed after convolution, as the data needs to be convolved only once for all image pixels, and redundancy weighting is executed in back-projection. In R. Grimmer, M. Oelhafen, U. Elstrom, and M. Kacheiriess, "CT Reconstruction with Extended z-Range", Conf. Record of IEEE NSSMIC, Oct 2008, this is achieved by rebinning data to a parallel geometry. In the embodiment, an algorithm proposed in A. A. Zamyatin, K. Taguchi, and M. D. Silver, "Practical Hybrid Convolution Algorithm for Helical CT Reconstruction", IEEE Transactions on Nuclear Sciences, vol. 53, no. 1, pages 167-174, which is incorporated herein by reference, is used. This allows switching the order of weighting and convolution without rebinning to a parallel geometry.

A preferred redundancy weighting function is described in Noo, M. Defrise, R. Clackdoyle, and H. Kudo, "Image reconstruction from fan-beam projections on less than a short scan", Phys. Med. Biol., 47 (2002) 2525-2546, (NDCK weight), which is given by:

$$w_N(\beta, \gamma) = \frac{c(\beta)}{\displaystyle\sum_{n=-N}^{N} c(\beta_n, \gamma_n)} \qquad (20)$$

$$(\beta_n, \gamma_n) = \begin{cases} (\beta + \pi n, \gamma) & n \text{ is even} \\ (\beta + \pi n + 2\gamma, -\gamma) & n \text{ is odd} \end{cases} \qquad (21)$$

where N is a natural number (1, 2, ...) , which represents the number of arcs in $1\pi$ used for image reconstruction. A function $c(\beta)$ is given by:

$$c(\beta) = \begin{cases} \cos^2 \dfrac{\pi(\beta_{start} + \sigma - \beta)}{2\sigma}, & \beta_{start} \leq \beta \leq \beta_{start} + \sigma \\ 1, & \beta_{start} + \sigma \leq \beta \leq \beta_{end} - \sigma \\ \cos^2 \dfrac{\pi(\beta - \beta_{end} + \sigma)}{2\sigma}, & \beta_{end} - \sigma \leq \beta \leq \beta_{end} \end{cases} \qquad (22)$$

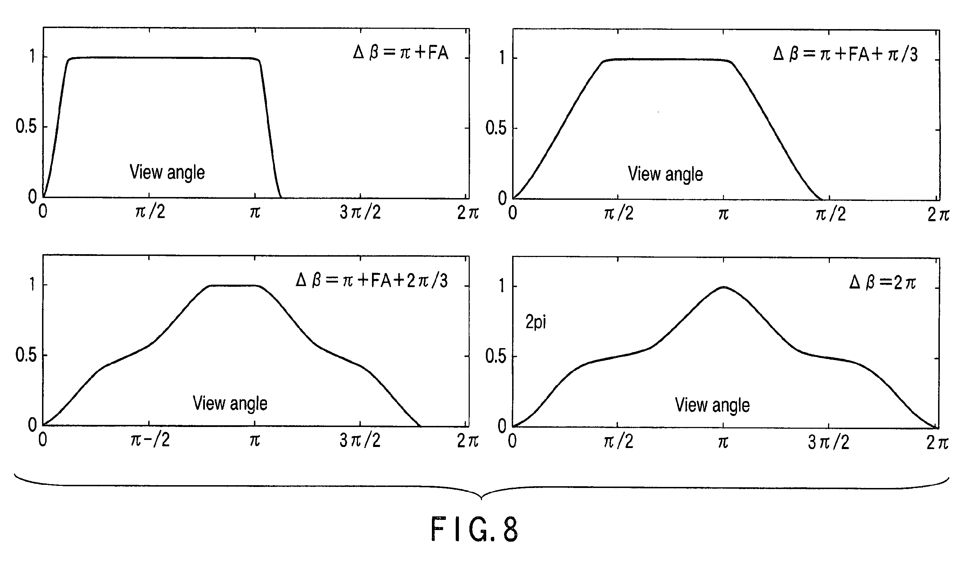

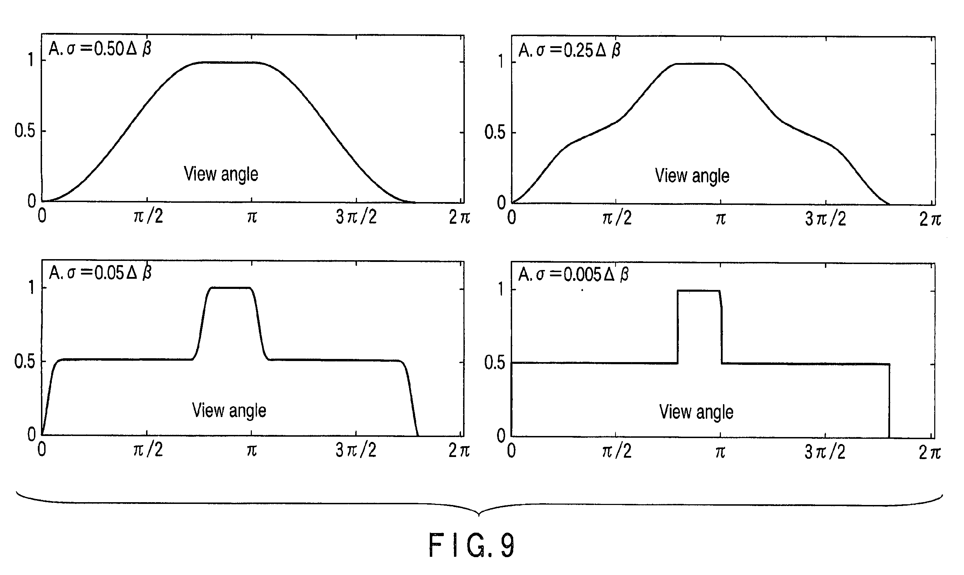

where $\sigma$ represents the smoothing interval. FIG. 8 shows the central channel profiles of the weight for a plurality of view angle ranges. FIG. 9 shows the central channel profiles of the weight for a plurality of smoothing intervals $\sigma$. As $\sigma$ approaches 0, a short-scan weight approaches a full-scan weight. Therefore, it is desired to use a small value of $\sigma$ near the ends of the $2\pi$ range. A smaller $\sigma$ results in noise reduction. If, however, $\sigma$ is too small, weighting becomes non-smooth, which may lead to streak artifacts. On the other hand, when extrapolated data is used, it is better to put a small weight on the extrapolated data at the ends of the view angle range, and therefore, it is better to use a larger value of $\sigma$.

FIG. 8 shows that the range [$\beta_{start}$, $\beta_{end}$] of the redundancy weighting function smoothly varies from full scan near the edge of an FS region to $1\pi$ half scan for pixels near the edge of an HS region. FIG. 9 shows that the shape of the redundancy weighting function smoothly varies from full scan near the edge of the FS region to $1\pi$ short scan for

the pixels near the edge of the HS region. Therefore, it is preferable to make σ variable depending on a view angle range Δβ(r, z). If Δβ (r, z) is close to 2π, σ is made small. For example, σ = 0.05 × Δβ(r, z) is set. If, on the other hand, Δβ(r, z) approaches $\Delta\beta_\pi(r)$, σ → 0.5 × Δβ(r, z) is preferably set. In other words, σ can be obtained by:

$$\sigma = k(\Delta\beta(r,z)) \times \Delta\beta(r,z)$$

$$k(\Delta\beta(r,z)) = k_{min} + \frac{\Delta\beta(r,z) - \Delta\beta_\pi(r)}{2\pi - \Delta\beta_\pi(r)}(k_{max} - k_{min}) \qquad (23)$$

Note that $k_{min} = 0.05$ and $k_{max} = 0.5$.

A pre-computed weight table is preferably used. A weight value is preferably obtained using a look-up table.

Extrapolated data is obtained outside the FS region, as shown in FIGS. 2. In some regions, the extrapolated FS data overlaps PBS data. In the overlapping region, the image subvolumes are smoothly feathered to improve image quality by using a weighted sum represented by:

$$Img = w \times Img_{ExtFS} + (1 - w) \times ImgG_{PBS}$$

w = 1 at the boundary of the FS region and the extended region, and w = 0 at the boundary of the extended region and the PBS region. w smoothly varies between 0 and 1. A linear function or smooth nonlinear function (for example, a polynomial $3x^2 - 2x^3$, or a trigonometric function) may be used. Thus, a smooth, gapless transition of w is obtained between the FS and PBS regions.

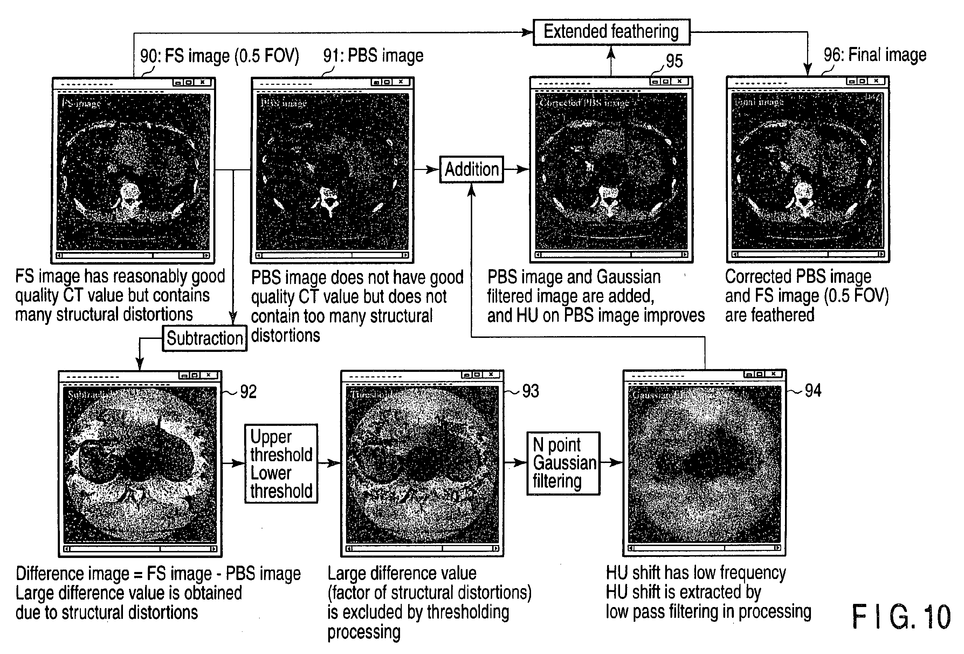

FIG. 10 shows the second example of the embodiment. The second example achieves better HU uniformity and improves image quality in an extrapolated region. Additional correction is performed according to the flowchart of FIG. 10. Using the above-described method, an FS image 90 and a PBS image 91 are obtained. The FS image 90 has a reasonably good quality CT value but contains many structural distortions. The PBS image 91 has a lower quality CT value but does not contain too many structural distortions. A difference image 92 is generated based on the FS image 90 and the PBS image 91. More specifically, a difference image 92 is generated by subtracting the FS image 90 from the PBS image 91. The difference image 92 has various difference values depending on the structural distortions. The difference image 92 is subjected to thresholding processing to generate a thresholded image 93. The thresholding processing uses upper and lower limit thresholds selected to exclude the structural distortions. The thresholded image 93 is then subjected to N-point Gaussian filtering to generate a Gaussian filtered image 94. The thresholded image 93 has high and low frequency components. An HU shift has low frequency. A high frequency component is removed by a Gaussian filter (low-pass filter). The Gaussian filtered image 94, therefore, has an HU shift at low frequency. The HU shift is extracted by filtering the image 94, and then added to the PBS image 91 to generate a corrected PBS image 95 having an improved HU value. The corrected PBS image 95 is then subjected to the above-described feathering processing to feather the extended region and the PBS region, thereby generating a final image 96 having improved image quality.

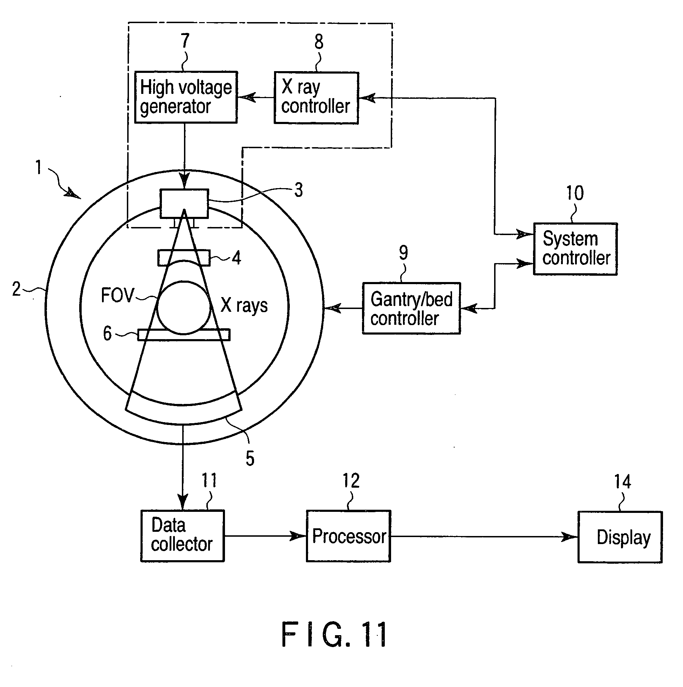

FIG. 11 shows an x-ray computed tomographic device according to the embodiment. A projection data measurement system including a gantry 1 accommodates an x-ray source 3 and a two-dimensional array type x-ray detector 5. The x-ray source 3 generates the cone beam of an approximately cone-shaped x-ray flux. The two-dimensional array type x-ray detector 5 includes a plurality of detector elements arranged in a two-dimensional manner. That is, the two-dimensional array type x-ray detector 5 includes a plurality of rows, each of which includes a plurality of elements arranged in one dimension. The x-ray source 3 and the two-dimensional array type x-ray detector 5 are installed on a rotating ring 2 on the opposite sides of a subject. The subject is laid on a sliding sheet of a bed 6. Each detector element corresponds to one channel. X-rays are emitted by the x-ray source 3 toward the subject through an x-ray filter 4. X-rays that have transmitted through the subject are detected as an electrical signal by the two-dimensional array type x-ray detector 5.

An x-ray controller 8 supplies a trigger signal to a high voltage generator 7. The high voltage generator 7 applies a high voltage to the x-ray source 3 at the timing it received the trigger signal. This causes the x-ray source 3 to emit x-rays. A gantry/bed controller 9 synchronously controls rotation of the rotating ring 2 of the gantry 1 and sliding of the sliding sheet of the bed 6. A system controller 10 functions as the control center of the entire system. The system controller 10 controls the x-ray controller 8 and the gantry/bed controller 9 to execute so-called helical scanning in which the x-ray source 3 moves along a helical path as seen from the subject. More specifically, the rotating ring 2 is continuously rotated at constant angular speed while the sliding sheet is displaced at constant speed, and the x-ray source 3 emits x-rays continuously or intermittently at constant angular intervals. Note that the system controller 10 may execute circular orbit scanning.

An output signal of the two-dimensional array type x-ray detector 5 is amplified by a data collector 11 for each channel, and converted into a digital signal to generate projection data. The projection data output from the data collector 11 is fed to a processor 12. The processor 12 performs the above-described various processes using the projection data. The processor 12 performs interpolation, backprojection, and reconstruction on the FS region, extended region, and PBS region, as described above, and then generates an improved image for a full rectangular FOV. The processor 12 determines backprojection data reflecting x-ray absorption in each voxel. In a helical scanning system using the cone beam of x-rays, an imaging region (FOV) has a cylindrical shape centered on the axis of rotation. The processor 12 defines a plurality of voxels (three-dimensional pixels) in this imaging region, and obtains the backprojection data for each voxel. Three-dimensional image data or tomographic image data compiled by using this backprojection data is supplied to a display 14. The display 14 visually displays the supplied three-dimensional image data as a three-dimensional image, or the supplied tomographic image data as a tomographic image.

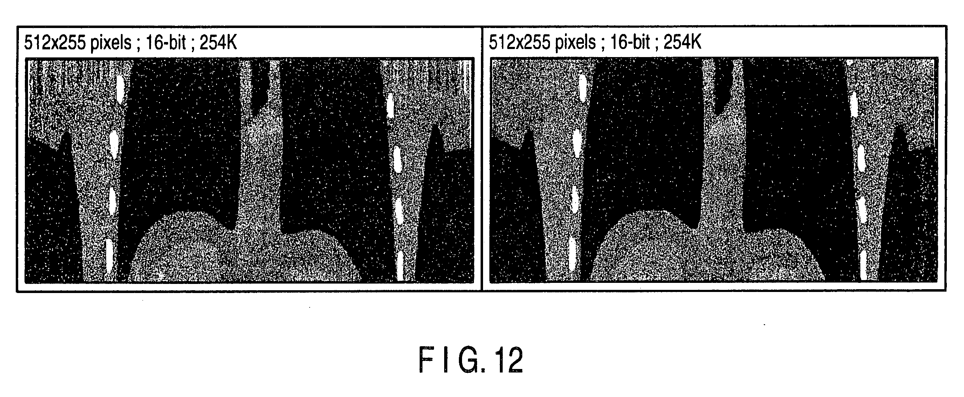

FIG. 12 shows an example of the embodiment. In this example, a torso phantom was exposed to x-rays using a detector with 256 rows of detector elements with a 0.5 mm width. The left image in FIG. 12 is generated by conventional FDK-FS reconstruction and the right image is generated by the method according to the embodiment. The conventional image has strong artifacts in corner regions due to insufficient data.

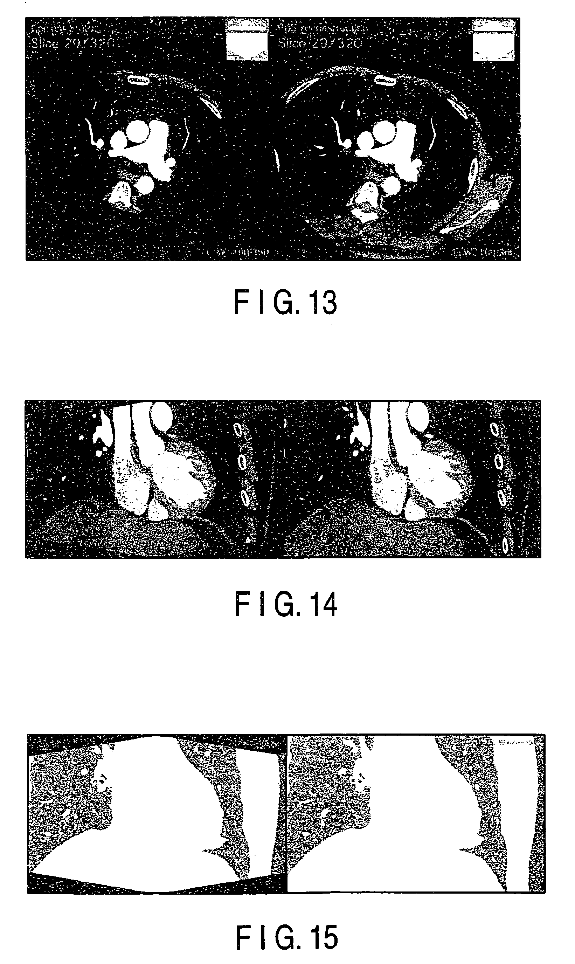

FIGS. 13, 14, and 15 show other examples. A 320-row detector with a 0.5 mm detector width was used. In each of FIGS. 13, 14, and 15, the left image is generated by the conventional FDK-FS processing and the right image is generated according to the embodiment. Referring to FIG. 13, missing regions are masked in the conventional image and the image processed according to the embodiment has greater coverage and details. The images of FIGS. 14 and 15 show the hexagonal FOV of the conventional image and the rectangular FOV of the image generated by the processing according to the embodiment. The images according to the embodiment exhibit good CT values with no shape distortion in corner regions.

The embodiment may also be embodied in the form of a computer-readable medium storing a program to cause a computer to carry out the above-described various operations and functions.

Numerous other modifications and variations of the embodiment are possible in light of the above teachings. This document and equations have been developed for a curved detector array. For example, it is possible to implement a flat or other detector array shape. Images may be reconstructed either in a cone-beam (CB) geometry or rebinned cone-parallel (CP) geometry. The CP geometry offers computational simplicity, but lowers spatial resolution due to an additional re-sampling step that uses interpolated data. Using the CB geometry better preserves the spatial resolution.

While certain embodiments have been described, these embodiments have been presented by way of example only, and are not intended to limit the scope of the invention as defined by the appended claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A computed tomographic device comprising:

    an x-ray source (3) configured to generate x-rays,
    an x-ray detector (5) configured to detect x-rays which are generated by the X-ray source (3) and transmitted through a subject, and
    a processor (12) configured to generate an entire image for the subject based on data collected via the x-ray detector (5), wherein the processor (12) is adapted to
    reconstruct a first partial image of the entire image based on full-scan data,
    reconstruct a second partial image of the entire image based on short-scan data,
    reconstruct a third partial image of the entire image based on data extrapolated from the full-scan data,
    generate a composite image of the second partial image and the third partial image, the composite image having an overlapping portion of the second partial image and the third partial image, and the overlapping portion being associated with a weighted sum of the second partial image and the third partial image, and
    generate the entire image using the first partial image, the second partial image, the third partial image, and the composite image.

**2.** The device according to claim 1, **characterized in that** the processor (12) is adapted to apply redundancy weighting to each pixel.

**3.** The device according to claim 1 or 2, **characterized in that** the processor (12) is adapted to feather the second partial image and the third partial image.

**4.** The device according to any of claims 1 to 3, **characterized in that** the processor (12) is adapted to
assign a weight w = 1 to data for a first boundary of the first partial image and the second partial image,
assign a weight w = 0 to data for a second boundary of the second partial image and the third partial image,
smoothly vary the weight w between 0 and 1 across the second partial image, any
combine the second partial image and the third partial image using an equation (Img = w × Img2 + (w - 1) × Img3),
where Img represents image data for a given pixel in the composite image, Img2 represents image data for a given
pixel in the second partial image, and Img3 represents image data for a given pixel in the third partial image.

**5.** The device according to any of claims 1 to 4, wherein the processor (12) is further adapted to
generate a difference image between the first partial image and the second partial image,
generate a thresholded image by thresholding the difference image,
generate a filtered image by filtering the thresholded image,
generate an added image by adding the filtered image and the second partial image, and
generate the entire image by feathering part of the first partial image and part of the added image.

**6.** The device according to any of claims 1 to 5, **characterized in that** an angle range of the short-scan data for a pixel
at (r, ϕ) is defined by $\beta_{start}$(r, ϕ, z) = ϕ + π - Δβ(r, z)/2 and $\beta_{end}$(r, ϕ, z) = ϕ + π + Δβ, z) /2 = $\beta_{start}$ (r, ϕ, z) + Δβ (r, z)
where

$$\Delta\beta(r, z) = \pi + 2\theta$$

$$\theta = \frac{\pi}{2} - \phi, \qquad \phi = \arcsin\left(\frac{d}{R}\sin\gamma\right)$$

$$\gamma = \arccos\left(\frac{r^2 + d^2 - R^2}{2rd}\right)$$

$$d = R\frac{z}{W}$$

where R represents a distance from the x-ray source (3) to a center of the x-ray detector (5), W represents a half-width of the x-ray detector (5) at the center of the x-ray detector(5), and z represents an axial direction of the subject.

**7.** The device according to claim 5 or 6, **characterized in that** the processor (12) is adapted to apply redundancy weighting to each pixel in the first partial image and the second partial image.

**8.** The device according to any of claims 2, 3, 4 and 7, **characterized in that** the processor (12) is adapted to apply redundancy weighting to the pixel using

$$w_N(\beta, \gamma) = \frac{c(\beta)}{\sum\limits_{n=-N}^{N} c(\beta_n, \gamma_n)}$$

where:

$$(\beta_n, \gamma_n) = \begin{cases} (\beta + \pi n, \gamma) & n \text{ is even} \\ (\beta + \pi n + 2\gamma, -\gamma) & n \text{ is odd} \end{cases}$$

N is a natural number, which represents the number of arcs in $1\pi$ used for image reconstruction, and

$$c(\beta) = \begin{cases} \cos^2 \dfrac{\pi(\beta_{start} + \sigma - \beta)}{2\sigma}, & \beta_{start} \leq \beta \leq \beta_{start} + \sigma \\ 1, & \beta_{start} + \sigma \leq \beta \leq \beta_{end} - \sigma \\ \cos^2 \dfrac{\pi(\beta - \beta_{end} + \sigma)}{2\sigma}, & \beta_{end} - \sigma \leq \beta \leq \beta_{end} \end{cases}$$

$$\sigma = k(\Delta\beta(r,z)) \times \Delta\beta(r,z)$$

$$k(\Delta\beta(r,z)) = k_{min} + \frac{\Delta\beta(r,z) - \Delta\beta_\pi(r)}{2\pi - \Delta\beta_\pi(r)}(k_{max} - k_{min})$$

$$k_{min} = 0.05, \quad k_{max} = 0.5$$

9. The device according to claim 7 or 8, **characterized in that** the processor (12) is adapted to apply redundancy weighting depending on an angular position of a reconstruction pixel.

10. The device according to any of claims 7 to 9, **characterized in that** the processor (12) is adapted to apply redundancy weighting depending on a radial position of a reconstruction pixel.

11. The device according to any of claims 7 to 10, **characterized in that** the processor (12) is adapted to apply redundancy weighting depending on a z-direction position of a reconstruction pixel.

12. The device according to any of claims 5 to 11, **characterized in that** the processor (12) is adapted to generate a composite image of the first partial image and the second partial image, and
the composite image is obtained by a weighted sum of an overlapping portion of the first partial image and the second partial image.

13. The device according to any of claims 5 to 12, **characterized in that** data is extrapolated across an entire region of an image which is adjacent to a portion where the full-scan data is available and overlaps the short-scan data, and the processor (12) is adapted to:

assign a weight w = 1 to data located at an edge of the region adjacent to the full-scan data,
assign a weight w = 0 to data located at a farthest extent of the region intersecting with the short-scan data,

smoothly vary the weight w between 1 and 0 across the region, and

combine data for an extrapolated image and short-scan data using an equation (Img = w × Img2 + (w - 1) × Img3), where Img represents data of a composite image at a given pixel, Img2 represents data of an extrapolated image at a given pixel, and Img3 represents short-scan data at a given pixel.

**14.** The device according to claim 8 as dependent on claim 2, **characterized in that** the processor (12) is adapted to determine a first region of the second partial image, the first region overlapping a second region of the third partial image,

generate the composite image by compositing a weighted sum of the first region and the second region,

determine a non-overlapping portion of the second partial image and the third partial image, and

generate the entire image using the first partial image, the non-overlapping portion, and the composite image.

## Patentansprüche

**1.** Computertomographievorrichtung, enthaltend:

eine Röntgenquelle (3), die konfiguriert ist zum Erzeugen von Röntgenstrahlen,

einen Röntgendetektor (5), der konfiguriert ist zum Detektieren von Röntgenstrahlen, die von der Röntgenquelle (3) erzeugt und durch ein Subjekt gesendet werden, und

einen Prozessor (12), der konfiguriert ist zum Erzeugen eines Gesamtbilds für das Subjekt, basierend auf Daten, die über den Röntgendetektor (5) gesammelt werden, wobei der Prozessor (12) angepasst ist zum

Rekonstruieren eines ersten Teilbilds des Gesamtbilds basierend auf Vollabtast-Daten,

Rekonstruieren eines zweiten Teilbilds des Gesamtbilds basierend auf Kurzabtast-Daten,

Rekonstruieren eines dritten Teilbilds des Gesamtbilds basierend auf Daten, die aus den Vollabtast-Daten extrapoliert sind,

Erzeugen eines Verbundbilds des zweiten Teilbilds und des dritten Teilbilds, wobei das Verbundbild einen Überlappungsbereich des zweiten Teilbilds und des dritten Teilbilds aufweist, und der Überlappungsbereich in Verbindung steht mit einer gewichteten Summe des zweiten Teilbilds und des dritten Teilbilds, und

Erzeugen des Gesamtbilds unter Verwendung des ersten Teilbilds, des zweiten Teilbilds, des dritten Teilbilds und des Verbundbilds.

**2.** Vorrichtung nach Anspruch 1, **dadurch gekennzeichnet, dass** der Prozessor (12) angepasst ist zum Anwenden einer Redundanzgewichtung für jedes Pixel,

**3.** Vorrichtung nach Anspruch 1 oder 2, **dadurch gekennzeichnet, dass** der Prozessor (12) angepasst ist, das zweite Teilbild und das dritte Teilbild ineinander verlaufen zu lassen.

**4.** Vorrichtung nach einem der Ansprüche 1 bis 3, **dadurch gekennzeichnet, dass** der Prozessor (12) angepasst ist zum

Zuordnen einer Gewichtung w = 1 zu Daten für eine erste Grenze des ersten Teilbilds und des zweiten Teilbilds,

Zuordnen einer Gewichtung w = 0 zu Daten für eine zweite Grenze des zweiten Teilbilds und des dritten Teilbilds, sanften Ändern der Gewichtung w zwischen 0 und 1 über das zweite Teilbild, und Kombinieren des zweiten Teilbilds und des dritten Teilbilds unter Verwendung einer Gleichung (Img = w x Img2 +(w-1) x Img3), wobei Img Bilddaten für ein gegebenes Pixel in dem Verbundbild darstellt, Img2 Bilddaten für ein gegebenes Pixel in dem zweiten Teilbild darstellt, und Img3 Bilddaten für ein gegebenes Pixel in dem dritten Teilbild darstellt.

**5.** Vorrichtung nach einem der Ansprüche 1 bis 4, bei der der Prozessor (12) ferner angepasst ist zum

Erzeugen eines Differenzbilds zwischen dem ersten Teilbild und dem zweiten Teilbild,

Erzeugen eines schwellengewerteten Bilds durch Schwellenwertbildung des Differenzbilds,

Erzeugen eines gefilterten Bilds durch Filtern des schwellengewerteten Bilds, Erzeugen eines Additionsbilds durch Addieren des gefilterten Bilds und des zweiten Teilbilds, und Erzeugen des Gesamtbilds durch Ineinanderverlaufenlassen eines Teils des ersten Teilbilds und eines Teils des Additionsbilds.

**6.** Vorrichtung nach einem der Ansprüche 1 bis 5, **dadurch gekennzeichnet, dass** ein Winkelbereich der Kurzabtast-Daten für ein Pixel bei (r, Φ) definiert ist durch $\beta_{start} (r, \Phi, z) = \Phi + \pi \, \Delta\beta (r, z) /2$ und ein $\beta_{ende} (r, \Phi, z) = \Phi + \pi + \Delta\beta (r, z) /2 = \beta_{start} (r, \Phi, z) + \Delta\beta (r, z)$, wobei

$$\Delta\beta\,(r,\,z) = \pi + 2\theta$$

$$\theta = \frac{\pi}{2} - \Phi, \quad \Phi = \arcsin\left(\frac{d}{R}\sin\gamma\right)$$

$$\gamma = \arccos\left(\frac{r^2 + d^2 - R^2}{2rd}\right)$$

$$d = R\frac{z}{W}$$

wobei R einen Abstand darstellt von der Röntgenquelle (3) zu einem Zentrum des Röntgendetektors (5), W eine halbe Breite des Röntgendetektors (5) am Zentrum des Röntgendetektors (5) darstellt, und z eine Axialrichtung des Subjekts darstellt.

7. Vorrichtung nach Anspruch 5 oder 6, **dadurch gekennzeichnet, dass** der Prozessor (12) angepasst ist zum Anwenden einer Redundanzgewichtung für jedes Pixel in dem ersten Teilbild und dem zweiten Teilbild.

8. Vorrichtung nach einem der Ansprüche 2, 3, 4 und 7, **dadurch gekennzeichnet, dass** der Prozessor (12) angepasst ist zum Anwenden einer Redundanzgewichtung für das Pixel unter Verwendung von

$$w_N(\beta,\,\gamma) = \frac{c(\beta)}{\displaystyle\sum_{n=-N}^{N} c(\beta_n, \gamma_n)}$$

wobei:

$$(\beta_n,\,\gamma_n) = \begin{cases} (\beta + \pi n, \gamma) & n \text{ ist gerade} \\ (\beta + \pi n + 2\gamma, -\gamma) & n \text{ ist ungerade} \end{cases}$$

N eine natürliche Zahl ist, die die Anzahl von Bögen in $1\pi$ darstellt, die zur Bildkonstruktion verwendet werden, und

$$c(\beta) = \begin{cases} \cos^2\dfrac{\pi(\beta_{start} + \sigma - \beta)}{2\sigma}, & \beta_{start} \leq \beta \leq \beta_{start} + \sigma \\ 1, & \beta_{start} + \sigma \leq \beta \leq \beta_{ende} - \sigma \\ \cos^2\dfrac{\pi(\beta - \beta_{ende} + \sigma)}{2\sigma}, & \beta_{ende} - \sigma \leq \beta \leq \beta_{ende} \end{cases}$$

$$\sigma = k(\Delta\beta(r,z)) \times \Delta\beta(r,z)$$

$$k(\Delta\beta(r,z)) = k_{min} + \frac{\Delta\beta(r,z) - \Delta\beta_\pi(r)}{2\pi - \Delta\beta_\pi(r)}(k_{max} - k_{min})$$

$$k_{min} = 0,05, \; k_{max} = 0.5$$

9. Vorrichtung nach Anspruch 7 oder 8, **dadurch gekennzeichnet, dass** der Prozessor (12) angepasst ist zum Anwenden einer Redundanzgewichtung in Abhängigkeit von einer Winkelposition eines Rekonstruktionspixels.

10. Vorrichtung nach einem der Ansprüche 7 bis 9, **dadurch gekennzeichnet, dass** der Prozessor (12) angepasst ist zum Anwenden einer Redundanzgewichtung in Abhängigkeit von einer radialen Position eines Rekonstruktionspixels.

11. Vorrichtung nach einem der Ansprüche 7 bis 10, **dadurch gekennzeichnet, dass** der Prozessor (12) angepasst ist zum Anwenden einer Redundanzgewichtung in Abhängigkeit von einer z-Richtungsposition eines Rekonstruktionspixels.

12. Vorrichtung nach einem der Ansprüche 5 bis 11, **dadurch gekennzeichnet, dass** der Prozessor (12) angepasst ist zum Erzeugen eines Verbundbilds aus dem ersten Teilbild und dem zweiten Teilbild, und das Verbundbild erhalten wird durch eine gewichtete Summe eines Überlappungsbereichs des ersten Teilbilds und des zweiten Teilbilds.

13. Vorrichtung nach einem der Ansprüche 5 bis 12, **dadurch gekennzeichnet, dass** die Daten über eine gesamte Region eines Bilds extrapoliert werden, das benachbart ist zu einem Bereich, wo die Vollabtast-Daten verfügbar sind, und die Kurzabtast-Daten überlappt, und der Prozessor (12) angepasst ist zum:

Zuordnen einer Gewichtung w = 1 zu Daten, die sich an einem Rand der Region benachbart zu den Vollabtast-Daten befinden,
Zuordnen einer Gewichtung w = 0 zu Daten, die sich am weitesten weg befinden von der Region, die die Kurzabtast-Daten kreuzt,
sanften Variieren der Gewichtung w zwischen 1 und 0 über die Region, und
Kombinieren der Daten für ein extrapoliertes Bild und der Kurzabtast-Daten unter Verwendung einer Gleichung (Img = w x Img2 + (w - 1) x Img3), wobei Img Daten darstellt für ein Verbundbild bei einem gegebenen Pixel, Img2 Daten darstellt für ein extrapoliertes Bild bei einem gegebenen Pixel, und Img3 Kurzabtast-Daten darstellt bei einem gegebenen Pixel.

14. Vorrichtung nach Anspruch 8, wenn er von Anspruch 2 abhängt, **dadurch gekennzeichnet, dass** der Prozessor (12) angepasst ist zum
Bestimmen einer ersten Region des zweiten Teilbilds, wobei die erste Region eine zweite Region des dritten Teilbilds überlappt,
Erzeugen des Verbundbilds durch Zusammensetzen einer gewichteten Summe der ersten Region und der zweiten Region,
Bestimmen eines Nichtüberlappungsbereichs des zweiten Teilbilds und des dritten Teilbilds und
Erzeugen des Gesamtbilds unter Verwendung des ersten Teilbilds, des Nichtüberlappungsbereichs und des Verbundbilds.

**Revendications**

1. Dispositif de tomodensitométrie comprenant :

une source de rayons X (3) configurée pour générer des rayons X;
un détecteur de rayons X (5) configuré pour détecter des rayons X qui sont générés par la source de rayons X (3) et transmis à travers un sujet ; et
un processeur (12) configuré pour générer une image complète du sujet en se basant sur les données récoltées via le détecteur de rayons X (5), le processeur (12) étant conçu pour :

reconstruire une première image partielle de l'image complète en se basant sur des données de balayage complet ;
reconstruire une deuxième image partielle de l'image complète en se basant sur des données de balayage de courte durée ;
reconstruire une troisième image partielle de l'image complète en se basant sur des données extrapolées à partir des données de balayage complet ;
générer une image composite de la deuxième image partielle et de la troisième image partielle, l'image composite possédant une portion chevauchante de la deuxième image partielle et de la troisième image partielle, et la portion chevauchante étant associée à une somme pondérée de la deuxième image partielle et de la troisième image partielle ; et
générer l'image complète en utilisant la première image partielle, la deuxième image partielle, la troisième image partielle et l'image composite.

2. Dispositif selon la revendication 1, **caractérisé en ce que** le processeur (12) est conçu pour appliquer une pondération de redondance à chaque pixel.

3. Dispositif selon la revendication 1, **caractérisé en ce que** le processeur (12) est conçu pour amincir la deuxième image partielle et la troisième image partielle.

4. Dispositif selon l'une quelconque des revendications 1 à 3, **caractérisé en ce que** le processeur (12) est conçu pour :

attribuer un coefficient de pondération w = 1 aux données pour une première limite de la première image partielle et de la deuxième image partielle ;
attribuer un coefficient de pondération w = 0 aux données pour une deuxième limite de la deuxième image partielle et de la troisième image partielle ;
faire varier de manière progressive le coefficient de pondération w entre 0 et 1 à travers la deuxième image partielle ; et
combiner la deuxième image partielle et la troisième image partielle en utilisant l'équation (Img = w x Img2 + (w - 1) x Img 3) dans laquelle Img représente les données d'images pour un pixel donné dans l'image composite, Img2 représente les données d'images pour un pixel donné dans la deuxième image partielle, et Img3 représente les données d'images pour un pixel donné dans la troisième image partielle.

5. Dispositif selon l'une quelconque des revendications 1 à 4, **caractérisé en ce que** le processeur (12) est en outre conçu pour :

générer une image de différence entre la première image partielle et la deuxième image partielle ;
générer une image seuil par seuillage de l'image de différence ;
générer une image filtrée par filtration de l'image seuillée ;
générer une image ajoutée par addition de l'image filtrée et de la deuxième image partielle ; et
générer l'image complète par amincissement de la première image partielle et d'une partie de l'image ajoutée.

6. Dispositif selon l'une quelconque des revendications 1 à 5, **caractérisé en ce que** la plage angulaire des données du balayage de courte durée pour un pixel à $(r, \phi)$ est définie par $\beta_{start} (r, \phi, z) = \phi + \pi - \Delta\beta(r, z) /2$ et $\beta end (r, \phi, Z) = \phi + \pi + \Delta\beta(r, z) /2 = \beta_{start} (r, \phi, z) + \Delta\beta(r, z)$
dans laquelle

$$\Delta\beta (r, z) = \pi + 2\theta$$

$$\theta = \frac{\pi}{2} - \phi, \qquad \phi = \arcsin\left(\frac{d}{R}\sin\gamma\right)$$

$$\gamma = \arccos\left(\frac{r^2 + d^2 - R^2}{2rd}\right)$$

$$d = R\frac{z}{W}$$

où R représente la distance entre la source de rayons X (3) et le centre du détecteur de rayons X (5), W représente la moitié de la largeur du détecteur de rayons X (5) au centre du détecteur de rayons X (5) et z représente la direction axiale du sujet.

7. Dispositif selon la revendication 5 ou 6, **caractérisé en ce que** le processeur (12) est conçu pour appliquer une pondération de redondance à chaque pixel dans la première image partielle et dans la deuxième image partielle.

8. Dispositif selon l'une quelconque des revendications 2, 3, 4 et 7, **caractérisé en ce que** le processeur (12) est conçu pour appliquer une pondération de redondance au pixel en utilisant la formule

$$w_N(\beta,\gamma) = \frac{c(\beta)}{\displaystyle\sum_{n=-N}^{N} c(\beta_n,\gamma_n)}$$

dans laquelle

$$(\beta_n,\gamma_n) = \begin{cases} (\beta + \pi n,\gamma) & n \text{ est un nombre pair} \\ (\beta + \pi n + 2\gamma,-\gamma) & n \text{ est un nombre impair} \end{cases}$$

N est un nombre naturel qui représente le nombre d'arcs en $1\Pi$ utilisés pour la reconstruction d'images, et

$$c(\beta) = \begin{cases} \cos^2\dfrac{\pi(\beta_{start} + \sigma - \beta)}{2\sigma}, & \beta_{start} \leq \beta \leq \beta_{start} + \sigma \\ 1, & \beta_{start} + \sigma \leq \beta \leq \beta_{end} - \sigma \\ \cos^2\dfrac{\pi(\beta - \beta_{end} + \sigma)}{2\sigma}, & \beta_{end} - \sigma \leq \beta \leq \beta_{end} \end{cases}$$

$$\sigma = k(\Delta\beta(r,z)) \times \Delta\beta(r,z)$$

$$k(\Delta\beta(r,z)) = k_{min} + \frac{\Delta\beta(r,z) - \Delta\beta_\pi(r)}{2\pi - \Delta\beta_\pi(r)}(k_{max} - k_{min})$$

$$k_{min} = 0.05, \quad k_{max} = 0.5$$

9. Dispositif selon la revendication 7 ou 8, **caractérisé en ce que** le processeur (12) est conçu pour appliquer une pondération de redondance en fonction de la position angulaire d'un pixel de reconstruction.

10. Dispositif selon l'une quelconque des revendications 7 à 9, **caractérisé en ce que** le processeur (12) est conçu pour appliquer une pondération de redondance en fonction de la position radiale d'un pixel de reconstruction.

11. Dispositif selon l'une quelconque des revendications 7 à 10, **caractérisé en ce que** le processeur (12) est conçu pour appliquer une pondération de redondance en fonction de la position en direction z d'un pixel de reconstruction.

12. Dispositif selon l'une quelconque des revendications 5 à 11, **caractérisé en ce que** le processeur (12) est conçu pour générer une image composite de la première image partielle et de la deuxième image partielle; et l'image composite est obtenue via la somme pondérée de la portion chevauchante de la première image partielle et de la deuxième image partielle.

13. Dispositif selon l'une quelconque des revendications 5 à 12, **caractérisé en ce que** les données sont extrapolées à travers toute la zone de l'image qui est adjacente à la portion dans laquelle les données de balayage complet sont disponibles et chevauchent les données à balayage de courte durée, et le processeur (12) est conçu pour :

attribuer un coefficient de pondération w = 1 aux données disposées au bord de la zone adjacente aux données de balayage complet ;
attribuer un coefficient de pondération w = 0 aux données situées à une plus grande distance de la zone qui coupe les données de balayage de courte durée ;
faire varier de manière progressive le coefficient de pondération w entre 0 et 1 à travers la zone ; et
combiner les données pour l'image extrapolée et les données du balayage de courte durée en utilisant l'équation (Img = w x Img2 + (w - 1) x Img 3) dans laquelle Img représente les données de l'image composite à un pixel donné, Img2 représente les données de l'image extrapolée à un pixel donné, et Img3 représente les données du balayage de courte durée à un pixel donné.

14. Dispositif selon la revendication 8, en fonction de la revendication 2, **caractérisé en ce que** le processeur (12) est conçu pour :

déterminer une première zone de la deuxième image partielle, la première zone chevauchant une deuxième zone de la troisième image partielle ;
générer l'image composite en calculant la somme pondérée de la première zone et de la deuxième zone ;
déterminer une zone non chevauchante de la deuxième image partielle et de la troisième image partielle ; et
générer l'image complète en utilisant la première image partielle, la zone non chevauchante et l'image composite.

F I G. 1A

F I G. 1B

FIG. 2A

FIG. 2B

FIG. 2C

# FIG. 2D

# FIG. 2E

F I G. 3

FOV

F I G. 4

F I G. 5A

F I G. 5B

F I G. 6A

F I G. 6B

FIG. 7A

FIG. 7B

F I G. 8

F I G. 9

EP 2 330 559 B1

Extended feathering

90: FS image (0.5 FOV)  91: PBS image

95

96: Final image

Addition

Subtraction

FS image has reasonably good quality CT value but contains many structural distortions

PBS image does not have good quality CT value but does not contain too many structural distortions

PBS image and Gaussian filtered image are added, and HU on PBS image improves

Corrected PBS image and FS image (0.5 FOV) are feathered

~92

~93

~94

Upper threshold Lower threshold

N point Gaussian filtering

Difference image = FS image - PBS image Large difference value is obtained due to structural distortions

Large difference value (factor of structural distortions) is excluded by thresholding processing

HU shift has low frequency HU shift is extracted by low pass filtering in processing

F I G. 10

EP 2 330 559 B1

F I G. 11

512x255 pixels ; 16-bit ; 254K

512x255 pixels ; 16-bit ; 254K

F I G. 12

F I G. 13

F I G. 14

F I G. 15

## REFERENCES CITED IN THE DESCRIPTION

**Patent documents cited in the description**

- US 2007297661 A1

**Non-patent literature cited in the description**

- **A. A. ZAMYATIN ; K. TAGUCHI ; M. D. SILVER.** Practical Hybrid Convolution Algorithm for Helical CT Reconstruction. *IEEE Transactions on Nuclear Sciences,* vol. 53 (1), 167-174
- **R. GRIMMER ; M. OELHAFEN ; U. ELSTROM ; M. KACHEIRIESS.** CT Reconstruction with Extended z-Range. *Conf. Record of IEEE NSSMIC,* October 2008
- **NOO, M. ; DEFRISE, R. CLACKDOYLE ; H. KUDO.** Image reconstruction from fan-beam projections on less than a short scan. *Phys. Med. Biol.,* 2002, vol. 47, 2525-2546